# EUROPÄISCHE PATENTSCHRIFT

(11) **EP 1 339 565 B1**
(45) Veröffentlichungstag und Bekanntmachung des Hinweises auf die Patenterteilung: **09.02.2005**
(21) Anmeldenummer: 01989402.1
(22) Anmeldetag: 06.12.2001
(51) Int. Cl.: B60N 2/46

(54) **VERSTELLMECHANISMUS ZUR EINSTELLUNG DER HÖHE EINER ARMAUFLAGE EINER KRAFTFAHRZEUGTÜR**
ADJUSTER MECHANISM FOR SETTING THE HEIGHT OF AN ARMREST ON A MOTOR VEHICLE DOOR
MECANISME DE REGLAGE EN HAUTEUR D'UN ACCOUDOIR D'UNE PORTIERE DE VEHICULE AUTOMOBILE

(30) Priorität: 06.12.2000 DE 10060857; 29.01.2001 DE 10104077
(43) Veröffentlichungstag der Anmeldung: 03.09.2003
(73) Patentinhaber: Brose Fahrzeugteile GmbH & Co. KG, Coburg, 96450 Coburg (DE)
(72) Erfinder: BÖRNCHEN, Thomas, 96052 Bamberg (DE); SCHLECHTRIEMEN, Martin, 96149 Breitengüssbach (DE); STAMMBERGER, Werner, 96253 Weissenbrunn (DE); WAGNER, Frank, 90408 Nürnberg (DE)
(74) Vertreter: Baumgärtel, Gunnar, Dr.
(86) Internationale Anmeldenummer: PCT/DE2001/004678
(87) Internationale Veröffentlichungsnummer: WO 2002/045996

(56) Entgegenhaltungen:
- DE-A1- 4 002 242
- FR-A1- 2 755 074

## Beschreibung

Die Erfindung betrifft einen Verstellmechanismus zur Einstellung der Höhe einer Armauflage einer Kraftfahrzeugtür nach dem Oberbegriff des Patentanspruchs 1.

Ein derartiger Verstellmechanismus umfasst einen Antrieb sowie ein dem Antrieb zugeordnetes Verstellgetriebe, das bei Aktivierung des Antriebs eine Verstellbewegung zur Einstellung der Höhe der an der Fahrzeugtür angeordneten Armauflage auslöst. Hierdurch kann die Höhe der Armauflage (Position der Armauflage entlang der vertikalen Fahrzeugachse) an die Bedürfnisse unterschiedlicher Fahrzeuginsassen angepasst werden.

Aus der DE 40 02 242 A1 ist eine höhenverstellbare Armlehne an der Tür eines Kraftfahrzeugs bekannt, die zur Einstellung der Höhe entlang zweier in der Fahrzeugtür angeordneter und sich in Verstellrichtung der Armlehne erstreckender Führungsschienen bewegbar ist.

Der Erfindung liegt das Problem zugrunde, einen neuen Verstellmechanismus zur Einstellung der Höhe einer Armauflage in einer Kraftfahrzeugtür zu Verfügung zu stellen, der sich durch einen einfachen Aufbau auszeichnet.

Dieses Problem wird erfindungsgemäß durch die Schaffung eines Verstellmechanismus mit den Merkmalen des Patentanspruchs 1 gelöst.

Danach ist das Verstellgetriebe des Verstellmechanismus ausgebildet zur Einstellung der Höhe der Armauflage durch Verschwenken der Armauflage um eine Schwenkachse.

Nach der erfindungsgemäßen Lösung wird die Armauflage also zur Einstellung ihrer Höhe nicht einfach entlang der vertikalen Fahrzeugachse verschoben, sondern vielmehr um eine (senkrecht zur vertikalen Fahrzeugachse verlaufenden) Schwenkachse verschwenkt. Die erfindungsgemäße Lösung zeichnet sich neben einem einfachen Aufbau vor allem durch einen geringen Platzbedarf aus. So können die zur Führung einer höhenverstellbaren Armauflage üblicherweise verwendeten Führungsschienen entfallen, wenn die Höhe der Armauflage nicht durch Verschiebung entlang der vertikalen Fahrzeugachse sondern durch eine Schwenkbewegung eingestellt wird.

Die Schwenkbewegung erfolgt vorzugsweise um eine parallel zur Fahrzeuglängsrichtung (x-Achse) verlaufende Schwenkachse.

Die Einstellung der Höhe einer Armauflage durch Verschwenken der Armauflage führt dazu, dass die Lage der Stützfläche der Armlehne, d.h. die Lage derjenigen Fläche, auf der der Arm eines Fahrzeuginsassen bequem abgelegt werden kann, ihre Position in einer Richtung quer zur Fahrzeuglängsrichtung und quer zur vertikalen Fahrzeugachse verändert. Die Armauflage ist daher derart auszubilden, dass in einem als Gebrauchsbereich dienenden Schwenkbereich der Armauflage bei jeder Schwenkposition der Armauflage ein Abschnitt der Armauflage zum Abstützen eines Armes eines Fahrzeuginsassen geeignet ist. Unter dem Gebrauchsbereich des Schwenkbereiches der Armlehne wird dabei ein Schwenkbereich verstanden, dessen einzelne Schwenkpositionen der Armlehne jeweils zur Einstellung einer Armauflagenposition dienen, in der sich ein Fahrzeuginsasse mit seinem Unterarm auf der Armauflage abstützen kann.

Um eine Einstellung der Höhe der Armauflage durch Verschwenken zu ermöglichen, ist die Armauflage bzw. zumindest deren zum Abstützen eines Armes dienender Stützabschnitt exzentrisch bezüglich der Schwenkachse ausgebildet.

Im Hinblick auf die Zurverfügungstellung einer Stützfläche bei jeder Einstellung der Höhe der Armauflage durch Verschwenken ist die Armauflage vorzugsweise konvex ausgebildet, und zwar insbesondere derart, dass die als Stützfläche Oberfläche der Armauflage im Querschnitt einen Abschnitt einer Spirale bildet.

Zur Erzeugung der Schwenkbewegung kann an der Armauflage ein Getriebeelement vorgesehen sein, das mit dem Antrieb des Verstellmechanismus der Armlehne gekoppelt ist. Dieses Getriebeelement kann beispielsweise durch ein Zahnsegment gebildet werden, das mit einem antriebsseitigen Zahnrad, z. B. einem Ritzel, zusammenwirkt. Andererseits kann die Schwenkachse der Armauflage drehfest mit einem Verstellhebel verbunden sein, der wiederum mit einem antriebseitigen Antriebshebel gekoppelt ist.

Da die Armauflage im eingebauten Zustand üblicherweise von einer Türinnenverkleidung der Fahrzeugtür in Richtung auf den Fahrzeuginnenraum absteht, besteht das Problem, dass es beim Verschwenken der Armauflage zur Einstellung von deren Höhe zu einer Kollision mit der Türinnenverkleidung kommen könnte. Um dies zu vermeiden, kann an der Armauflage und/oder der Türinnenverkleidung ein bewegbarer und/oder elastischer Abschnitt vorgesehen sein, durch den eine dem Verschwenken der Armlehne entgegenstehende Kollision zwischen Armlehne und Türinnenverkleidung verhindert wird. So kann beispielsweise ein Abschnitt der Türinnenverkleidung (mittels eines Filmscharnieres) klappbar ausgebildet sein, so dass er der Armauflage ausweichen kann, wenn ein Abschnitt der Armauflage beim Verschwenken in die Türinnenverkleidung eindringt. Alternativ kann der entsprechende Abschnitt der Türinnenverkleidung auch verschiebbar ausgebildet sein und die Verschiebung über eine Kulisse gesteuert werden.

Schließlich können die einander zugeordneten Abschnitte der Armauflage einerseits und der Türinnenverkleidung andererseits elastisch ausgebildet sein, so dass sie beim Eindringen eines Abschnitts der Armauflage in die Türinnenverkleidung nachgeben und das Verschwenken der Armauflage nicht behindern.

Weitere Merkmale und Vorteile der Erfindung werden bei der nachfolgenen Beschreibung eines Ausführungsbeispiels anhand der Figuren deutlich werden.

Es zeigen:
- Fig. 1a -: einen Schnitt durch eine Türinnenverkleidung einer Kraftfahrzeugtür mit einer durch Schwenken in ihrer Höhe verstellbaren Armauflage;
- Fig. 1b -: eine perspektivische Darstellung der Armauflage aus Figur 1a;
- Fig. 2a -: eine Abwandlung des Ausführungsbeispiels aus Figur 1a, wobei ein der Armauflage benachbarter Abschnitt der Türinnenverkleidung nach innen klappbar ist;
- Fig. 2b -: die Anordnung aus Figur 1a bei veränderter Einstellung der Höhe der Armauflage;
- Fig. 3 -: eine Abwandlung des Ausführungsbeispiels aus Figur 1a, wobei die Türinnenverkleidung im Bereich der Armauflage elastisch deformierbar ausgebildet ist;
- Fig. 4 -: eine Abwandlung des Ausführungsbeispiels aus Figur 1a, wobei die Türinnenverkleidung im Bereich der Armauflage einen verschiebbaren Abschnitt aufweist.

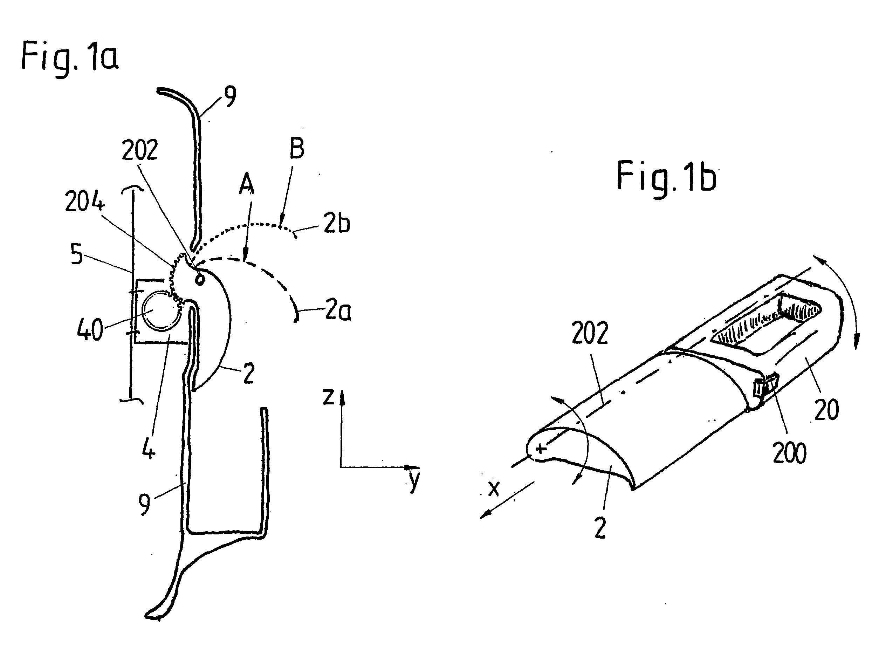

Figur 1a zeigt einen Querschnitt durch eine Türinnenverkleidung 9, die an einem Türinnenblech 5 einer Kraftfahrzeugtür befestigbar ist. Die Türinnenverkleidung 9 dient zur Abdeckung des Türinnenblechs 5 zum Fahrzeuginnenraum hin und weist darüberhinaus Funktionselemente, wie z.B. eine Kartentasche und eine von der Türinnenverkleidung zum Fahrzeugraum hin abstehende Armauflage 2 (Armlehne bzw. - stütze) auf. Die Armauflage 2 ist in ihrer Höhe einstellbar, um eine an die Bedürfnisse unterschiedlicher Fahrzeuginsassen angepasste, ergonomische Abstützung des Unterarmes des jeweiligen Fahrzeuginsassen auf der Armauflage 2 zu gewährleisten.

Die Einstellung der Höhe der Armauflage 2 (Einstellung der Stützfläche der Armauflage 2 entlang der vertikalen Fahzeugachse z) erfolgt durch Verschwenken der Armauflage 2 um eine sich in Fahrzeuglängsrichtung (senkrecht zur Blattebene) erstreckende Schwenkachse 202. Zur Erzeugung der Schwenkbewegung ist ein elektrischer oder manueller Antrieb 4 vorgesehen, der ein Zahnrad 40 antreibt, welches mit einem an der Armauflage 2 vorgesehenen Verzahnungsabschnitt 204 zusammenwirkt. Dieser Verzahnungsabschnitt 204 ragt durch eine Öffnung in der Türinnenverkleidung 9 hindurch in den Bereich zwischen dem Türinnenblech 5 und der Türinnenverkleidung 9, wo auch der an dem Türinnenblech 5 befestigte Antrieb 4 angeordnet ist. Der den Antrieb 4 aufnehmende Bereich der Türinnenhaut muss nicht unmittelbar durch ein Türinnenblech 5 gebildet werden, sondern kann alternativ auch durch eine auf das Türinnenblech aufzusetzende Grundplatte (Modulträger) gebildet werden, an der verschiedene Komponenten einer Fahrzeugtür, wie z.B. der Verstellmechanismus einer höhenverstellbaren Armlehne oder ein Fensterheber, außerhalb der Fahrzeugtür vormontierbar sind.

In den Figur 1a und 1b ist demnach eine Armauflage 2 dargestellt, deren Höheneinstellung durch Schwenken um eine im wesentlichen in Fahrtrichtung x weisende Achse 202 erfolgt. Hierzu weist die äußere Abstützkontur der Armauflage - ausgehend von der Schwenkachse 202 - eine exzentrische, vorzugsweise spiralförmige Kontur auf. Die Schwenkachse 202 liegt im Bereich der Ebene der Türinnenverkleidung 9.

In der durchgezogenen Kontur gemäß Fig. 1a befindet sich die Armauflage 2 in der heruntergeklappten Position, die eine gute Zugänglichkeit und Einsicht zum Ablagefach herstellt. Mit der gestrichelten Kontur ist eine untere bis mittlere Höhe der Armauflage 2a dargestellt, wobei der Arm im Bereich des Pfeils A abgestützt wird. Eine obere Position der Armauflage 2b zeigt die gepunktete Kontur mit einer bevorzugten Stützfläche im Bereich des Pfeils B. Es ist erkennbar, dass bei einer Verstellung der Armauflage 2 nach oben (durch Schwenken der Armauflage 2 um ihre Schwenkachse 202) der jeweils als Stützfläche dienende Oberflächenbereich der Armauflage einerseits mit einer Komponente entlang der vertikalen Fahrzeugachse z nach oben verstellt wird und andererseits mit einer Bewegungskomponente entlang einer zum Fahrzeuginnenraum I weisenden Richtung y wandert.

Für den Fall, daß die Verstellung der Armlehne manuell, z.B. mit einem Schrittschaltwerk erfolgen soll, kann gemäß Fig. 1b ein Zuziehgriff 20' der Fahrzeugtür als Antriebselement dienen. Zu diesem Zweck sollte der Zuziehgriff 20' um die selbe Achse 202 oder eine dazu parallel verlaufende Achse schwenkbar gelagert und in seiner Nullpunktlage arretierbar sein. Durch Schwenkbewegungen des Griffes 20' nach oben wird eine gleichgerichtete Schwenkbewegung der Armlehne 2' ausgelöst, was eine Anhebung der Abstützfläche zur Folge hat. In analoger Weise erfolgt eine Absenkung der Abstützfläche der Armlehne nach unten.

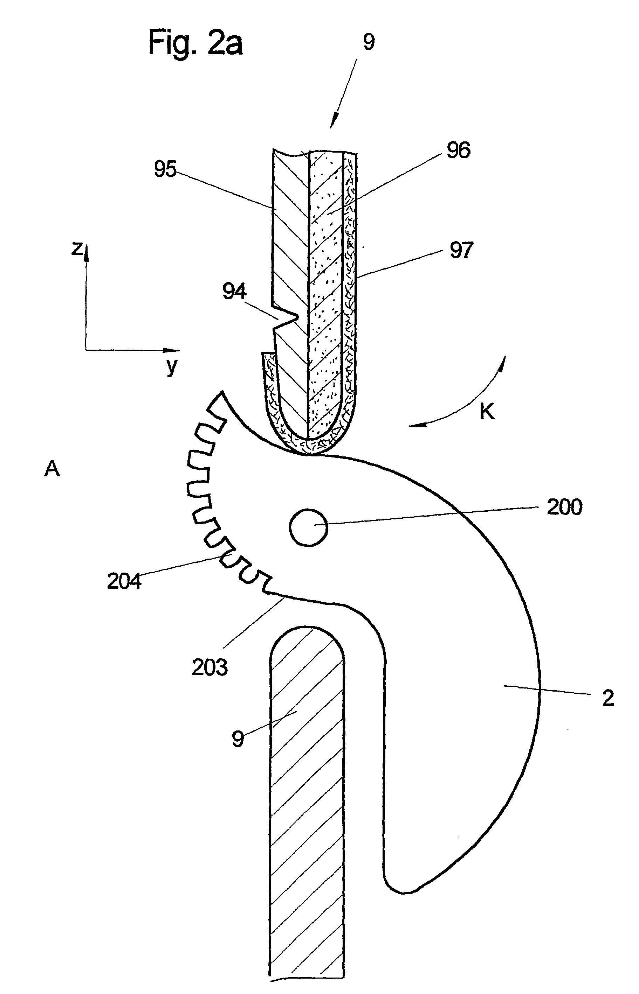

Figur 2a zeigt eine Abwandlung des Ausführungsbeispiels aus Figur 1a hinsichtlich der Gestaltung der Türinnenverkleidung 9 in einem Bereich oberhalb der Armauflage 2.

Zum einen ist Figur 2a entnehmbar, dass die Türinnenverkeidung 9 oberhalb der Armauflage 2 drei Schichten aufweist, nämlich einen aus Kunststoff bestehenden Träger 95, eine hierauf zum Fahrzeuginnenraum I hin angeordnete Schaumstoffschicht 96 sowie eine die Türinnenverkleidung 9 zum Fahrzeuginnenraum I hin abdeckende Textilbeschichtung 97. Selbstverständlich kann auch die in Figur 1a lediglich schematisch dargestellte Türinnenverkleidung 9 oberhalb der Armauflage 2 in entsprechender Weise ausgebildet sein. Der Bereich der Türinnenverkleidung 9 unterhalb der Armauflage 2, der regelmäßig eine sogenannte Kartentasche aufweist, vergl. Figur 1a, ist üblicherweise einfacher gestaltet, da in diesem Bereich geringere Anforderungen an das Design bestehen. Aber auch hier ist ein mehrschichtiger Aufbau der Türinnenverkleidung ohne weiteres möglich.

Gemäß Figur 2a weist der Bereich der Türinnenverkleidung 9 oberhalb der Armauflage 2 eine keilförmige Aussparung 94 in dem Träger 95 auf, die ein Filmscharnier bildet, so dass der zwischen dem Filmscharnier 94 und der Armlehne 2 befindliche Abschnitt der Türinnenverkleidung unter Einwirkung äußerer Kräfte um die durch das Filmscharnier definierte Achse in Richtung auf den Fahrzeugaußenraum A geklappt werden kann.

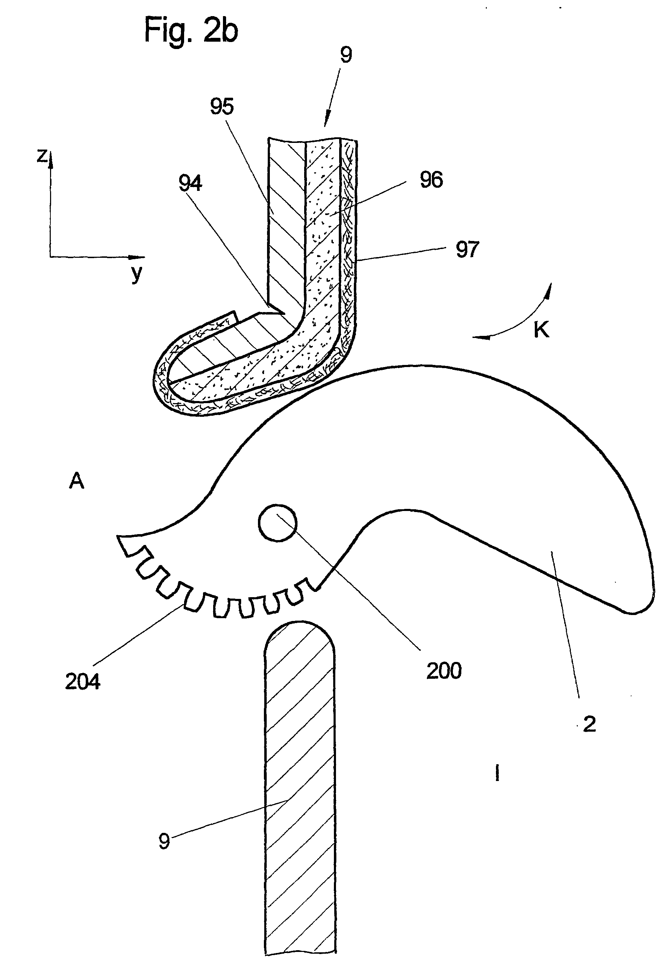

Hierdurch wird ermöglicht, dass die Türinnenverkleidung 9 einerseits zur Vermeidung sichtbarer, das Design beeinträchtigender Spalte von oben her unmittelbar bis an die Armauflage 2 herangeführt sein kann, und dass andererseits die Türinnenverkleidung 9 das Verschwenken der Armauflage 2 nicht behindert, sondern vielmehr - wie in Figur 2b dargestellt - beim Verschwenken der Armauflage 2 durch Ausführung einer Klappbewegung K nachgibt. Bei einem Verschwenken der Armauflage 2, das gemäß Figur 2b einer Verstellung der Höhe der Armauflage 2 entlang der vertikalen Fahrezeugachse z entspricht, wird also eine Kollision zwischen Türinnenverkleidung 2 und Armauflage 9, die einem weiteren Verschwenken der Armauflage 2 entgegenstünde, durch die Klappbewegung K des unterhalb des Filmschamieres angeordneten Abschnittes der Türinnenverkleidung 9 verhindert.

Bei dem sich unterhalb der Armauflage 2 erstreckenden Bereich der Türinnenverkleidung 9 ist eine solche klappbare Ausgestaltung vorwiegend nicht erforderlich, da der hieran angrenzende Bereich 203 der Armauflage 2 nicht nach ergonomischen Gesichtspunkten gestaltet werden muss und daher so ausgelegt werden kann, dass beim Verschwenken der Armauflage 2 eine Kollision mit der Türinnenverkleidung 9 verhindert wird. Der besagte Abschnitt 203 der Armauflage 2 ist hierzu als Kreisabschnitt ausgebildet, wobei der Kreismittelpunkt durch die Schwenkachse 202 der Armauflage 2 gebildet wird.

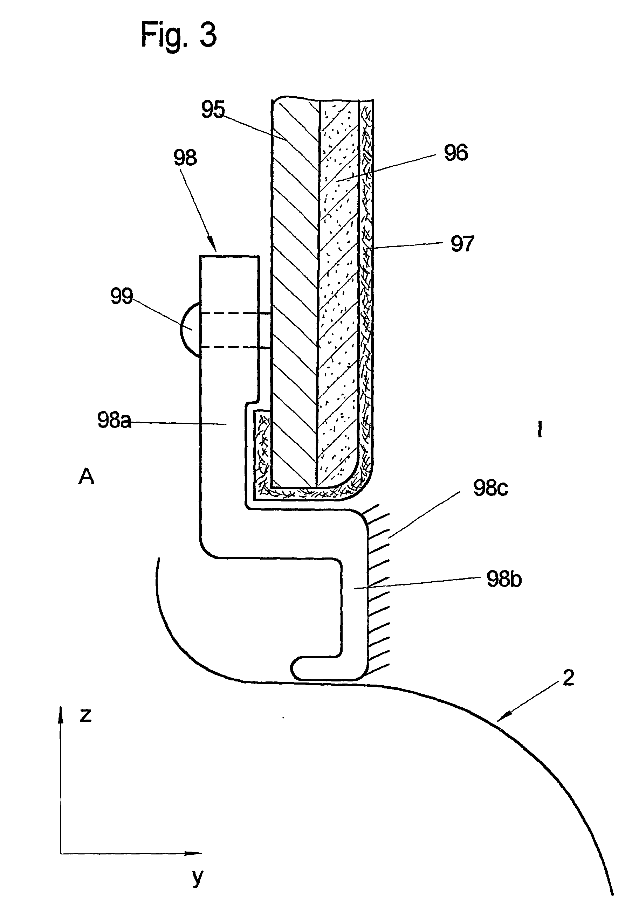

Figur 3 zeigt eine Variante der Anordnung aus den Figuren 2a und 2b, die ein Nachgeben der Türinnenverkleidung 9 beim Verschwenken der Armauflage 2 ermöglicht. Hierzu ist der von oben an die Armauflage 2 angrenzende Abschnitt der Türinnenverkleidung 9 als ein elastisches Element in Form einer Gummileiste 98 ausgebildet, die einen Befestigungsbereich 98a zur Befestigung an der Türinnenverkleidung 9 sowie einen Designbereich 98b aufweist, der einen Teil der Türinnenverkleidung 9 bildet und sich bis zu der Armauflage 2 erstreckt.

Der Befestigungsbereich 98a erstreckt sich auf der dem Fahrzeuginnenraum I abgewandten Seite der Türinnenverkleidung 9 und ist dort mittels eines Schweißnietes 99 mit dem Träger 95 der Türinnenverkleidung 9 verbunden. Der Designbereich 98b der Gummileiste 98 ist elastisch deformierbar ausgebildet und aus Designgründen mit einer Beschichtung 98c versehen. Beim Verschwenken der Armauflage 2, um diese entlang der vertikalen Fahrzeugachse z nach oben zu verstellen, wird der Designabschnitt 98b der Gummileiste 98 in einer Richtung weg vom Fahrzeuginnenraum I verdrängt, so dass die Schwenkbewegung der Armauflage 2 nicht behindert wird.

Alternativ könnte auch der entsprechende Abschnitt der Armauflage (2) elastisch deformierbar ausgebildet sein.

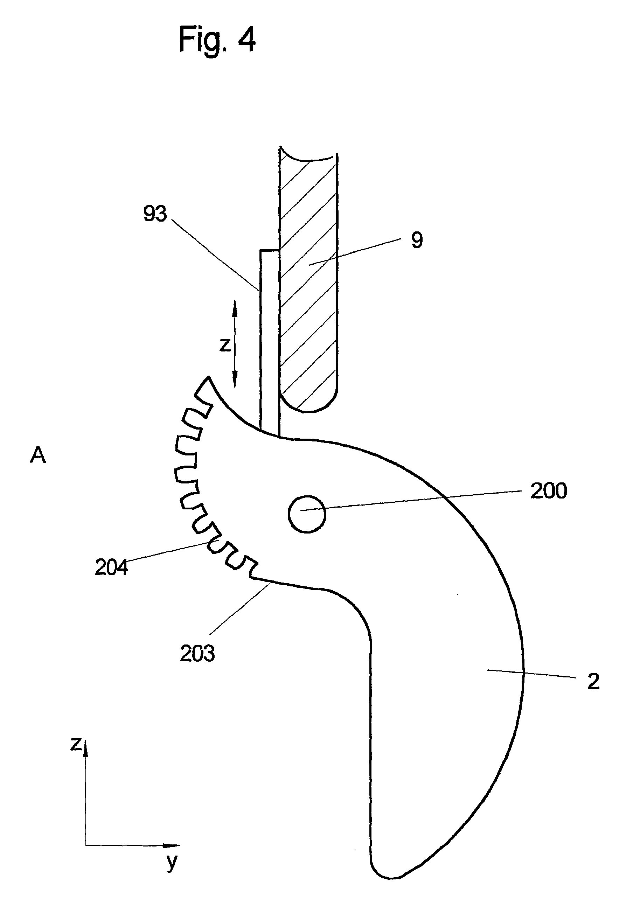

Bei dem Ausführungsbeispiel gemäß Figur 4 ist der von oben an die Armauflage 2 anschließende Abschnitt der Türinnenverkleidung 9 als entlang der vertikalen Fahrzeugachse z verschiebbare Blende 93 ausgebildet, die bei einem Verschwenken der Armauflage 2 derart entlang der vertikalen Fahrzeugachse z verschiebbar ist, dass eine Kollision mit der Armauflage 2 verhindert wird. Die Bewegung der Blende 93 kann mit der Schwenkbewegung der Armauflage 2 über geeignete Koppelelemente abgestimmt sein, z.B. durch eine Steuerung der Blende 93 mittels Kulissenscheiben.

Die Blende 93 wird bei einem Verschwenken der Armauflage 2 jeweils derart verschoben, dass die Schwenkbewegung der Armauflage 2 nicht behindert wird, andererseits aber möglichst keine sichtbaren Spalte zwischen Türinnenverkleidung 9 und Armauflage 2 entstehen.

## Patentansprüche

1. Verstellmechanismus zur Einstellung der Höhe einer Armauflage in einer Kraftfahrzeugtür, mit
- einem Antrieb und
- einem dem Antrieb nachgeordneten Verstellgetriebe (40, 202, 204), das bei Aktivierung des Antriebs eine Verstellbewegung zur Einstellung der Höhe der Armauflage auslöst;
**dadurch gekennzeichnet,**
**dass** das Verstellgetriebe (202, 204) zur Einstellung der Höhe der Armauflage (2) eine Schwenkbewegung der Armauflage (2) auslöst.

2. Verstellmechanismus nach Anspruch 1, **dadurch gekennzeichnet, dass** die Schwenkbewegung bezogen auf den in eine Fahrzeugtür eingebauten Zustand des Verstellmechanismus um eine entlang der Fahrzeuglängsrichtung (x) verlaufende Achse (202) erfolgt.

3. Verstellmechanismus nach Anspruch 1 oder 2, **dadurch gekennzeichnet, dass** dem Verstellmechanismus eine Armauflage (2) zugeordnet ist.

4. Verstellmechanismus nach Anspruch 3, **dadurch gekennzeichnet, dass** die Armauflage (2) um die entlang der Fahrzeuglängsrichtung (x) verlaufende Achse (202) verschwenkbar gelagert ist und dass die Schwenkachse (202) vorzugsweise in der Ebene einer Türinnenverkleidung (9) der Fahrzeugtür verläuft.

5. Verstellmechanismus nach Anspruch 3 oder 4, **dadurch gekennzeichnet, dass** in einem als Gebrauchsbereich dienenden Schwenkbereich der Armauflage (2) bei jeder Schwenkposition der Armauflage (2) ein Abschnitt der Armauflage (2) zur Abstützung eines Armes eines Fahrzeuginsassen angeordnet ist.

6. Verstellmechanismus nach Anspruch 5, **dadurch gekennzeichnet, dass** der zum Abstützen eines Armes dienende Abschnitt der Armauflage (2) mit zunehmender Höhe der Einstellung der Armauflage sich in Richtung auf den Fahrzeuginnenraum bewegt.

7. Verstellmechanismus nach einem der Ansprüche 3 bis 6, **dadurch gekennzeichnet, dass** die der Abstützung eines Armes dienende Oberfläche der Armauflage (2) exzentrisch bezüglich der Schwenkachse (202) ausgebildet ist.

8. Verstellmechanismus nach einem der Ansprüche 3 bis 7, **dadurch gekennzeichnet, dass** die der Abstützung eines Armes dienende Oberfläche der Armauflage (2) konvex ausgebildet ist.

9. Verstellmechanismus nach einem der Ansprüche 3 bis 8, **dadurch gekennzeichnet, dass** die der Abstützung eines Armes dienende Oberfläche der Armauflage (2) im Querschnitt einen Abschnitt einer Spirale bildet.

10. Verstellmechanismus nach einem der Ansprüche 3 bis 9, **dadurch gekennzeichnet, dass** an der Armauflage (2) ein Getriebeelement (204) vorgesehen ist, das zur Erzeugung einer Schwenkbewegung der Armauflage (2) mit einem durch den Antrieb (4) antreibbaren Antriebselement (40) gekoppelt ist.

11. Verstellmechanismus nach Anspruch 10, **dadurch gekennzeichnet, dass** das an der Armauflage (2) vorgesehene Getriebeelement (204) durch ein Zahnsegment gebildet wird.

12. Verstellmechanismus nach einem der Ansprüche 3 bis 11, **dadurch gekennzeichnet, dass** der Armauflage (2) im eingebauten Zustand eine Türinnenverkleidung (9) zugeordnet ist, von der die Armauflage (2) in Richtung (y) auf den Fahrzeuginnenraum (I) absteht.

13. Verstellmechanismus nach Anspruch 12, **dadurch gekennzeichnet, dass** an der Armauflage (2) und/oder der Türinnenverkleidung (9) ein bewegbarer und/oder elastischer Abschnitt vorgesehen ist, um beim Verschwenken der Armauflage (2) eine Kollision der Armauflage (2) mit der Türinnenverkleidung (9), die dem Verschwenken entgegenstünde, zu vermeiden.

14. Verstellmechanismus nach Anspruch 13, **dadurch gekennzeichnet, dass** ein an die Armauflage (2) angrenzender Abschnitt der Türinnenverkleidung (9) klappbar ausgebildet ist.

15. Verstellmechanismus nach Anspruch 14, **dadurch gekennzeichnet, dass** der klappbare Abschnitt der Türinnenverkleidung (9) über ein Scharnier (94), insbesondere ein Filmscharnier, mit einem weiteren Bereich der Türinnenverkleidung (9) verbunden ist.

16. Verstellmechanismus nach Anspruch 13, **dadurch gekennzeichnet, dass** ein an die Armauflage (2) angrenzender Abschnitt der Türinnenverkleidung (9) verschiebbar ist.

17. Verstellmechanismus nach Anspruch 13, **dadurch gekennzeichnet, dass** ein an die Armauflage (2) angrenzende Abschnitt der Türinnenverkleidung (9) und/oder ein an die Türinnenverkleidung (9) angrenzender Abschnitt der Armauflage (2) elastisch deformierbar ausgebildet ist.

## Claims

1. Adjuster mechanism for adjusting the height of an armrest on a vehicle door, with
- a drive and
- an adjusting gear (40, 202, 204) which is mounted on the output side of the drive and which when the drive is activated triggers an adjusting movement in order to adjust the height of the armrest
**characterised in that**
the adjusting gear (202, 204) triggers a swivel movement of the armrest (2) in order to set the height of the armrest (2).

2. Adjuster mechanism according to claim 1 **characterised in that** the swivel movement takes place in relation to the installed state of the adjuster mechanism in a vehicle door about an axis (202) which runs along the vehicle longitudinal direction (x).

3. Adjuster mechanism according to claim 1 or 2 **characterised in that** an armrest (2) is assigned to the adjuster mechanism.

4. Adjuster mechanism according to claim 3 **characterised in that** the armrest (2) is mounted to swivel about the axis (202) running along the longitudinal direction (x) of the vehicle and that the swivel axis (202) preferably runs in the plane of an inside door trim (9) of the vehicle door.

5. Adjuster mechanism according to claim 3 or 4 **characterised in that** in a swivel area of the armrest (2) serving as the useful area with each swivel position of the armrest (2) a section of the armrest (2) is arranged for supporting an arm of a vehicle occupant.

6. Adjuster mechanism according to claim 5 **characterised in that** the section of the armrest (2) serving to support an arm is moved in the direction of the inside of the vehicle as the height of adjustment of the armrest increases.

7. Adjuster mechanism according to one of claims 3 to 6 **characterised in that** the surface of the armrest (2) serving to support an arm is formed eccentric relative to the swivel axis (202).

8. Adjuster mechanism according to one of claims 3 to 7 **characterised in that** the surface of the armrest (2) serving to support an arm is formed convex.

9. Adjuster mechanism according to one of claims 3 to 8 **characterised in that** the surface of the armrest (2) serving to support an arm forms a section of a spiral in cross-section.

10. Adjuster mechanism according to one of claims 3 to 9 **characterised in that** a gearing element (204) provided on the armrest (2) is coupled to a drive element (40) which can be driven by the drive (4) in order to generate swivel movement of the armrest (2).

11. Adjuster mechanism according to claim 10 **characterised in that** the gearing element (204) provided on the armrest (2) is formed by a toothed segment.

12. Adjuster mechanism according to one of claims 3 to 11 **characterised in that** the armrest (2) in the installed state is associated with a door inside trim (9) from which the armrest (2) protrudes in the direction (y) of the inside (I) of the vehicle.

13. Adjuster mechanism according to claim 12 **characterised in that** a movable and/or elastic section is provided on the armrest (2) and/or door inside trim (9) in order to avoid, as the armrest (2) swivels, a collision between this (2) and the inside door trim (9) which would oppose the swivel movement.

14. Adjuster mechanism according to claim 13 **characterised in that** a section of the door inside trim (9) adjoining the armrest (2) is designed to be folding.

15. Adjuster mechanism according to claim 14 **characterised in that** the folding section of the door inside trim (9) is connected through a hinge (94) more particularly a film hinge to a further region of the door inside trim (9).

16. Adjuster mechanism according to claim 13 **characterised in that** a section of the door inside trim (9) adjoining the armrest (2) is displaceable.

17. Adjuster mechanism according to claim 13 **characterised in that** a section of the door inside trim (9) adjoining the armrest (2) and/or a section of the armrest (2) adjoining the door inside trim (9) is designed elastically deformable.

## Revendications

1. Mécanisme de réglage en hauteur d'un accoudoir dans une portière de véhicule automobile, comportant
- un dispositif d'entraînement et
- un engrenage de réglage (40, 202, 204) couplé au dispositif d'entraînement, lequel engrenage, lors de l'activation du dispositif d'entraînement, déclenche un mouvement de réglage pour le réglage en hauteur de l'accoudoir ;
**caractérisé en ce que** l'engrenage d'entraînement (202, 204) pour le réglage en hauteur de l'accoudoir (2) déclenche un mouvement de basculement de l'accoudoir (2).

2. Mécanisme de réglage selon la revendication 1, **caractérisé en ce que** le mouvement de basculement rapporté à l'état du mécanisme de réglage incorporé dans une portière de véhicule, s'effectue autour d'un axe (202) s'étendant le long de la direction longitudinale du véhicule (x).

3. Mécanisme de réglage selon la revendication 1 ou 2, **caractérisé en ce qu'**un accoudoir (2) est couplé au mécanisme de réglage.

4. Mécanisme de réglage selon la revendication 3, **caractérisé en ce que** l'accoudoir (2) est disposé de façon basculante autour de l'axe (202) s'étendant le long de la direction longitudinale du véhicule (x), et **en ce que** l'axe de basculement (202) s'étend de préférence dans le plan d'un habillage interne (9) de la portière du véhicule.

5. Mécanisme de réglage selon la revendication 3 ou 4, **caractérisé en ce que**, dans une zone de basculement servant de zone d'utilisation de l'accoudoir (2), pour chaque position de basculement de l'accoudoir (2), est agencé une partie d'accoudoir (2) pour l'appui d'un bras d'un passager de véhicule.

6. Mécanisme de réglage selon la revendication 5, **caractérisé en ce que** la partie de l'accoudoir (2) servant à l'appui d'un bras se déplace à une hauteur de réglage de l'accoudoir croissante dans la direction de l'habitacle du véhicule.

7. Mécanisme de réglage selon l'une des revendications 3 à 6, **caractérisé en ce que** la surface de l'accoudoir (2) servant à l'appui d'un bras est conçue de façon excentrique par rapport à l'axe de basculement (202).

8. Mécanisme de réglage selon l'une des revendications 3 à 7, **caractérisé en ce que** la surface de l'accoudoir (2) servant à l'appui d'un bras est conçue de façon convexe.

9. Mécanisme de réglage selon l'une des revendications 3 à 8, **caractérisé en ce que** la surface de l'accoudoir (2) servant à l'appui d'un bras forme en section transversale un tronçon d'une spirale.

10. Mécanisme de réglage selon l'une des revendications 3 à 9, **caractérisé en ce qu'**un élément d'engrenage (204) est prévu sur l'accoudoir (2), lequel élément d'engrenage est, pour la production d'un mouvement de basculement de l'accoudoir (2), accouplé à un élément d'entraînement (40) pouvant être entraîné par le dispositif d'entraînement (4).

11. Mécanisme de réglage selon la revendication 10, **caractérisé en ce que** l'élément d'engrenage (204) prévu sur l'accoudoir (2) est formé par un segment denté.

12. Mécanisme de réglage selon l'une des revendications 3 à 11, **caractérisé en ce qu'**un habillage interne de portière (9) est couplé à l'accoudoir (2) dans l'état installé, à partir duquel habillage l'accoudoir fait saillie (2) en direction (y) de l'habitacle du véhicule automobile (I).

13. Mécanisme de réglage selon la revendication 12, **caractérisé en ce que**, sur l'accoudoir (2) et/ou l'habillage interne de portière (9), il est prévu une partie mobile et/ou élastique afin que, lors du basculement de l'accoudoir (2), on évite une collision de l'accoudoir (2) avec l'habillage interne de portière (9) qui résisterait au basculement.

14. Mécanisme de réglage selon la revendication 13, **caractérisé en ce qu'**une partie de l'habillage interne de portière (9) qui est limitrophe de l'accoudoir (2) est conçue de façon rabattable.

15. Mécanisme de réglage selon la revendication 14, **caractérisé en ce que** la partie rabattable de l'habillage interne de portière (9) est raccordée par l'intermédiaire d'une charnière (94), en particulier d'une charnière à lanière, avec une autre zone de l'habillage interne de portière (9).

16. Mécanisme de réglage selon la revendication 13, **caractérisé en ce qu'**une partie de l'habillage interne de portière (9) qui est limitrophe de l'accoudoir (2) peut être décalée.

17. Mécanisme de réglage selon la revendication 13, **caractérisé en ce qu'**une partie de l'habillage interne de portière (9) qui est limitrophe de l'accoudoir (2) et/ou une partie de l'accoudoir (2) qui est limitrophe de l'habillage interne de portière (9) est conçue de façon entièrement déformable.
